(19) Europäisches Patentamt
European Patent Office
Office européen des brevets

(11) EP 2 752 257 B1

(12) EUROPEAN PATENT SPECIFICATION

(45) Date of publication and mention
of the grant of the patent:
**27.07.2016 Bulletin 2016/30**

(21) Application number: **12827602.9**

(22) Date of filing: **31.08.2012**

(51) Int Cl.:
*B21D 22/20* (2006.01)   *C22C 18/00* (2006.01)
*C23C 2/06* (2006.01)   *C22C 38/00* (2006.01)
*C22C 38/32* (2006.01)   *B32B 15/01* (2006.01)
*C21D 9/00* (2006.01)   *C23C 2/02* (2006.01)
*C23C 2/26* (2006.01)   *C23C 2/28* (2006.01)
*C23C 2/40* (2006.01)   *C21D 1/18* (2006.01)
*C22C 38/02* (2006.01)   *C22C 38/04* (2006.01)
*C22C 38/06* (2006.01)   *C22C 38/28* (2006.01)
*B21D 37/16* (2006.01)

(86) International application number:
**PCT/JP2012/072246**

(87) International publication number:
**WO 2013/031984 (07.03.2013 Gazette 2013/10)**

(54) **HOT-STAMP MOLDED PART AND METHOD FOR MANUFACTURING SAME**

HEISSGESTANZTES FORMTEIL UND VERFAHREN ZU SEINER HERSTELLUNG

PIÈCE MISE EN FORME PAR MATRIÇAGE À CHAUD ET PROCÉDÉ POUR SA FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2011   JP 2011191063**
**07.10.2011   JP 2011223439**

(43) Date of publication of application:
**09.07.2014 Bulletin 2014/28**

(73) Proprietor: **Kabushiki Kaisha Kobe Seiko Sho**
**Kobe-shi, Hyogo 651-8585 (JP)**

(72) Inventors:
• **OKITA, Keisuke**
**Kobi-shi,**
**Hyogo 651-2271 (JP)**

• **IKEDA, Shushi**
**Nagoya-shi,**
**Aichi 451-0045 (JP)**
• **NAITOU, Junya**
**Kobi-shi,**
**Hyogo 651-2271 (JP)**

(74) Representative: **TBK**
**Bavariaring 4-6**
**80336 München (DE)**

(56) References cited:
**WO-A1-2004/087983      WO-A1-2008/102012**
**WO-A1-2011/081043      WO-A1-2011/081043**
**JP-A- 2003 073 774      JP-A- 2003 126 921**
**JP-A- 2006 021 216      JP-A- 2007 182 608**
**JP-A- 2010 527 407      JP-A- 2011 117 086**
**JP-A- 2011 117 086**

**Description**

TECHNICAL FIELD

The present invention relates to press hardened parts used in structural members of automobile components which requires strength and corrosion resistance and a method of producing the same, and particularly, to press hardened parts in which a predetermined strength is obtained by shaping and quenching at the time of forming a preheated surface-treated steel sheet in a predetermined shape and a method of producing the press hardened parts.

BACKGROUND ART

As one of measures to improve fuel efficiency of an automobile originated from global environmental problems, the weight of vehicle body has been reduced, and thus it is necessary to increase strength of a steel sheet to be used in the automobile as high as possible. However, when the steel sheet is produced to have a high strength in order to reduce the weight of the automobile, an elongation EL or an "r" value (Lankford value) is lowered, resulting in the deterioration of press formability or shape fixability.

In order to solve the above-described problems, components are produced by employing a press hardening process which ensures the strength after the forming in such a manner that after the steel sheet (workpiece) is heated to a predetermined temperature (for example, temperature in an austenite phase) to lower the strength (that is, to facilitate the forming), the shaping and rapid cooling treatment (quenching) using a difference between temperatures of the steel sheet and a forming tool are carried out on the steel sheet by the forming in the forming tool of a low temperature (for example, room temperature) compared with a thin steel sheet.

According to such a press hardening process, since the steel sheet is formed in a state of low strength, the spring-back of the steel sheet is decreased (excellent in shape fixability), resulting in the achievement of a tensile strength in the 1500 MPa class by the quenching. In this regard, the press hardening process has been called various names such as a hot forming method, a hot stamping method, a hot stamp method, and a die quenching method, in addition to a hot pressing method.

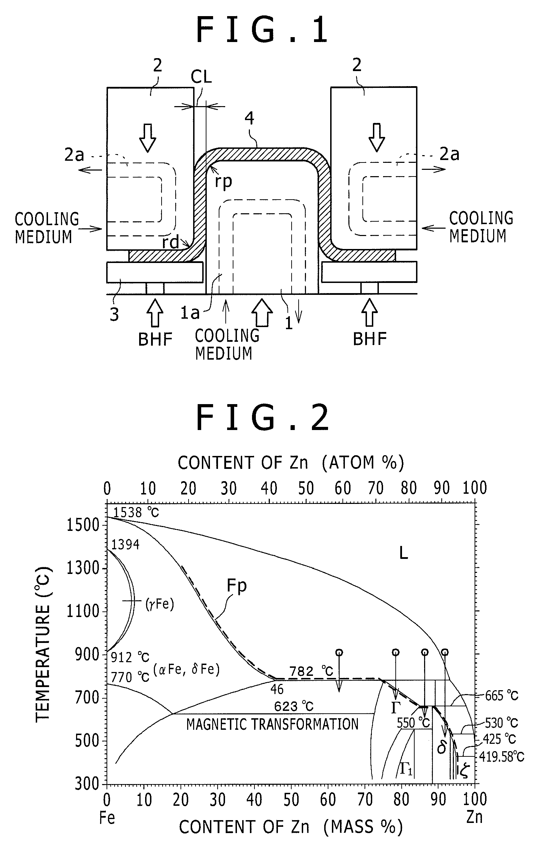

Fig. 1 is a schematic explanatory diagram illustrating a structure of a forming tool for carrying out the press hardening as described above (hereinafter, represented sometimes by "hot stamp"). In figure, reference numerals 1, 2, 3, and 4 represent a punch, a die, a blank holder, and a steel sheet (blank), respectively, and abbreviations BHF, rp, rd, and CL represent a blank holding force, a punch shoulder radius, a die shoulder radius, and a clearance between the punch and the die, respectively. In these components, a passage 1a and a passage 2a are formed in the inside of the punch 1 and the die 2, respectively, and a cooling medium (for example, water) can pass through the passages. The forming tool is configured such that these members are cooled by the cooling medium passing through these passages.

When a steel sheet is subjected to a hot stamp (for example, hot deep drawing) using the forming tool, the forming is started in a state where a steel sheet (blank) 4 is softened by heating to a two-phase temperature range ($Ac_1$ transformation point to $Ac_3$ transformation point) or a single-phase temperature range that is not lower than an $Ac_3$ transformation point. That is, the steel sheet 4 is pushed into a cavity of the die 2 (between the components indicated by reference numerals 2 and 2 in Fig. 1) by the punch 1 with the steel sheet 4 in a high-temperature state being sandwiched between the die 2 and the blank holder 3 to form the steel sheet 4 into a shape corresponding to the outer shape of the punch 1 while reducing the outer diameter of the steel sheet 4. In addition, heat is removed from the steel sheet 4 to the forming tool (punch 1 and die 2) by cooling the punch 1 and the die 2 in parallel with the forming, and the quenching of a base material is carried out by further retaining and cooling the steel sheet at the bottom dead center of forming (the point of time when a punch head is positioned at the deepest portion: the state illustrated in Fig. 1). Formed products of 1500 MPa class with high dimension accuracy can be obtained by carrying out such a forming method. Furthermore, such a forming method results in that the volume of a pressing machine can be made smaller since a forming load can be reduced as compared with the case where components in the same strength class are manufactured by cold pressing.

The above-described procedures indicate a method (direct method) of performing simultaneously the forming and quenching on the press hardened parts of the simple shape as illustrated in Fig. 1 from the stage of the steel sheet in the forming tool, but the press hardening process applied to the present invention may be applied to a case of producing a hardened parts of a relatively complicated shape without being limited to a case of applying to such a method.

That is, in the case of producing the hardened parts of the relatively complicated shape, it is sometimes difficult to make a final shape of a product by the press hardening at one time. In this case, a method of performing cold press forming in the previous step of the press hardening may be employed (this method is called an "indirect method"). The indirect method is a method in which portions which are hard to form are pre-formed in an approximate shape by a cold working and the press hardening is performed on portions other than the pre-formed portions. According to this method, for example, in a case of forming a component having three unevenness portions (ridge portions) of the hardened parts, two portions are manufactured by the cold press forming, and then the press hardening is performed on the third portion.

Even if any one of the above methods is employed, when the steel sheet is heated to a high temperature, especially, to a temperature of about 900°C, which is an austenite region, during the press hardening, the surface of the steel sheet is oxidized for several seconds in the atmosphere at the time of moving the steel sheet to a press forming machine from a heating furnace, and thus a scale is formed thereon. Therefore, the scale is peeled off during the press hardening to cause press flaws. In addition, since a coating property of a corrosion-resistant coating film is deteriorated due to the presence of the scale, it is necessary to remove the scale by a peening or the like after press cooling.

As a measure to avoid troubles caused by the scale formation, a surface-treated steel sheet subjected to aluminum plating, zinc plating, hot dip alloyed zinc plating or the like on a press forming material (base steel sheet) may be used. In these surface treatments, it has been preferably considered to apply the Zn-plated steel sheet or the hot dip alloyed zinc plated steel sheet from the point of view of sacrificial corrosion protection properties or cost, but since the melting point or boiling point of zinc becomes a liquid phase or a vapor phase at a temperature range at which the press hardening is performed, evaporation or oxidation of the plated layer occurs during the press hardening and the obtained surface-treated steel sheet is excessively alloyed with the base steel sheet to cause the Zn-deposition to the press die or the significant deterioration of corrosion resistance or weldability.

As a method to avoid these problems, for example, techniques of Patent Documents 1 and 2 have been proposed. A basic idea of these techniques is to increase the melting point of the plated layer by the formation of a Zn-Fe-based plated layer containing a predetermined amount of Fe on the surface of the base material. In a case of employing the Zn-Fe-based plated layer as the plated layer, the effect for increasing the melting point of the plated layer can be expected, but for example, the plated layer should contain Fe of about 70 mass% in order to make the melting point become 900°C or higher, and thus the deterioration of corrosion resistance, coating adhesion, and weldability increases in this composition. In addition, when the alloying is progressed, oxidation reaction is also facilitated, and thus harmful influences such as the dropout of an oxidation layer, the poor adhesion after the coating or the like occur.

Conversely, in a case of suppressing the content of Fe in the plated layer to about 20 mass%, the melting point is lowered to about 670°C, and the liquid phase comes in contact with the forming tool, resulting in the occurrence of the deposition or the galling. In addition, when the zinc melted during the press hardening is diffused into grain boundaries of the steel sheet, liquid metal embrittlement (hereinafter, abbreviated as "LME") occurs to cause the intergranular cracking. Particularly, when the forming is performed immediately after rapid heating, since there is no time for alloying, the risk of the intergranular cracking further increases.

Meanwhile, Patent Document 3 discloses a method of hot-forming after heating a Zn-plated steel sheet provided with a Zn-plated layer to a predetermined temperature and then cooling it at a temperature of 500°C or higher and 730°C or lower for 60 seconds. However, since this technique includes the condition of forming the plated layer in a molten state, the peeling of the plated layer or the intergranular cracking is not completely avoid. For example, when the content of Fe contained in the Zn-based plated layer is 15 mass%, since it does not come in a complete solid-phase region unless the temperature is 685°C or lower, the cooling may be insufficient at, for example, 700°C.

CITATION LIST

PATENT DOCUMENT

   Patent Document 1: JP 2003-73774 A
   Patent Document 2: JP 2003-147499 A
   Patent Document 3: JP 2007-182608 A
   Patent document 4: JP 2011 117086 A

JP 2011 117086 A discloses providing a high-strength hardened body having excellent corrosion resistance and fatigue resistance. In this document, a method of providing such a high-strength hardened body includes forming an Zn plating layer on a base steel, heating and then cooling the steel, and then performing a hot stamping accompanied by a processing quenching.

SUMMARY OF THE INVENTION

The present invention is made in view of the above-described problems, and an object thereof is to provide a method useful to produce press hardened parts having excellent properties while avoiding a peeling of a plated layer or an intergranular cracking of a base material during the press forming when press hardening is performed using a surface-treated steel sheet formed with a Zn-Fe-based plated layer and to provide press hardened parts obtained by this method.

With respect to the method, the above object is solved by a method having the features of claim 1. Further developments are stated in the dependent claims. Press hardened parts obtained by such a method are stated in claim 9.

In the method of the present invention, preferably, an average cooling rate may be 20°C/s or more (more preferably, 30°C/s or more) at the time of cooling the surface-treated steel sheet to the temperature that is not higher than the solidifying point of the plated layer after heating the steel sheet. In addition, preferably, the forming may be started at a temperature higher than a martensitic transformation start temperature and be finished at a temperature lower than the martensitic transformation start temperature.

According to the present invention, when the press hardening is performed using the surface-treated steel sheet formed with the Zn-Fe-based plated layer, press hardened parts having excellent properties can be achieved by appropriately controlling conditions during the press forming to avoid the peeling of the plated layer or the intergranular cracking.

BRIEF DESCRIPTION OF DRAWINGS

[Fig. 1] Fig. 1 is a schematic explanatory diagram illustrating a structure of a forming tool for carrying out press hardening.
[Fig. 2] Fig. 2 is a binary phase diagram of Zn-Fe alloy.
[Fig. 3] Fig. 3 is a schematic diagram illustrating an image of a heat pattern.
[Fig. 4] Fig. 4 is a schematic explanatory diagram illustrating a structure of a forming tool used in an example.

DESCRIPTION OF EMBODIMENTS

In producing press hardened parts by performing press hardening after heating a surface-treated steel sheet formed with a Zn-Fe-based plated layer to a predetermined temperature, the inventors of the present invention have investigated from various aspects in order to avoid a peeling of the plated layer or an intergranular cracking during the press forming and to realize press hardened parts having excellent characteristics.

Consequently, in producing the press hardened parts by performing the press forming on the surface-treated steel sheet, which is formed with the Zn-Fe-based plated layer, using a press forming tool, the inventor has found the fact the press hardened parts having the excellent properties can be realized without occurrence of the above drawbacks when the forming is started after the surface-treated steel sheet is heated to a temperature that is not lower than $Ac_1$ transformation point of a base steel sheet and 950°C or lower and then is cooled to a temperature that is not higher than a solidifying point of the plated layer depending on the content of Fe in the plated layer, thereby accomplishing the present invention.

In a general press hardening, from the point of view of productivity improvement and reduction in press reaction force, it has been considered that the requirement necessary for acquirement of excellent formability is to start the forming at a temperature as high as possible in forming the steel sheet taken out from a heating furnace after heating the steel sheet to a predetermined temperature. Under these circumstances, even in producing the press hardened parts by performing the press forming on the surface-treated steel sheet formed with the Zn-Fe-based plated layer, it has been considered that the requirement is necessary to start the forming at a temperature as high as possible immediately after taking out the steel sheet from the heating furnace. In a case of performing the press hardening under these considerations, however, the peeling of the plated layer or the intergranular cracking easily occurs during the press forming, and thus it has not been possible to achieve the press hardened parts having good surface quality and condition. In some cases, a liquid phase comes in contact with the forming tool to cause the occurrence of deposition or galling.

Thus, the inventors have further investigated on, for example, a forming temperature, formability, and conditions of the plated layer at the time of forming. As a result, the inventors found that the formability is also preferably improved without the occurrence of the peeling of the plated layer or the intergranular cracking when starting the forming after heating the surface-treated steel sheet to a predetermined temperature and then cooling the surface-treated steel sheet to a temperature that is not higher than the solidifying point of the plated layer.

In a method of the present invention, upon producing the press hardened parts by performing the press forming on the surface-treated steel sheet, which is formed with the Zn-Fe-based plated layer, using the forming tool, it is necessary to heat the surface-treated steel sheet to the temperature that is not lower than $Ac_1$ transformation point of the base steel sheet and 950°C or lower. In order to exhibit effects of the press hardening process, it is necessary to set the heating temperature to at least the $Ac_1$ transformation point or higher of the base steel sheet. When the heating temperature is less than the $Ac_1$ transformation point, it is not possible to obtain the appropriate amount of austenite during the heating and ensure the excellent formability. In addition, when the heating temperature exceeds 950°C, zinc in a Zn-plated layer is boiled and evaporated, and thus the corrosion resistance deteriorates, undesirably. In addition, the preferred lower limit of the heating temperature is an $Ac_3$ transformation point or higher (temperature required for complete austenitizing) of the base steel sheet, and the preferred upper limit is 930°C or lower.

After heating the surface-treated steel sheet to the above temperature range, it is necessary to cool the surface-treated steel sheet to the temperature that is not higher than the solidifying point of the plated layer depending on the content of Fe in the plated layer. Thus, the forming is started after the Zn-Fe-based plated layer is solidified, and the peeling of the plated layer is prevented at the time of forming. This indicates that sacrificial corrosion protection properties of the Zn-Fe-based plated steel sheet is exhibited even in the press hardened parts produced by a hot stamp and thus it is possible to be applied to an under body. In addition, since the plated layer is solidified in the heating and the cooling process during the forming, it is not necessary to heat and retain the steel sheet even in the rapid heating and a significant tack time can be shortened.

Fig. 2 is a binary phase diagram of Zn-Fe alloy. In figure, a broken line indicates a boundary (that is, corresponding to a solidifying point: indicated by "Fp" in figure) between a region including a liquid phase and a solid phase region, and the solid phase becomes a region below the boundary. Since the Zn-Fe-based plated layer has different Fp temperatures depending on the content of Fe in the plated layer, the cooling is carried out such that the temperature of the plated layer before the forming is not higher than Fp (corresponding to the solidifying point) depending on the content of Fe. In the step of cooling the surface-treated steel sheet to the temperature of the solidifying point or lower, the entire of the Zn-Fe-based plated layer is not immediately solidified, but the above effect is exhibited by the cooling of the steel sheet to the temperature of at least the solidifying point or lower and by the starting of the forming in the step where only a part of solid phase is precipitated.

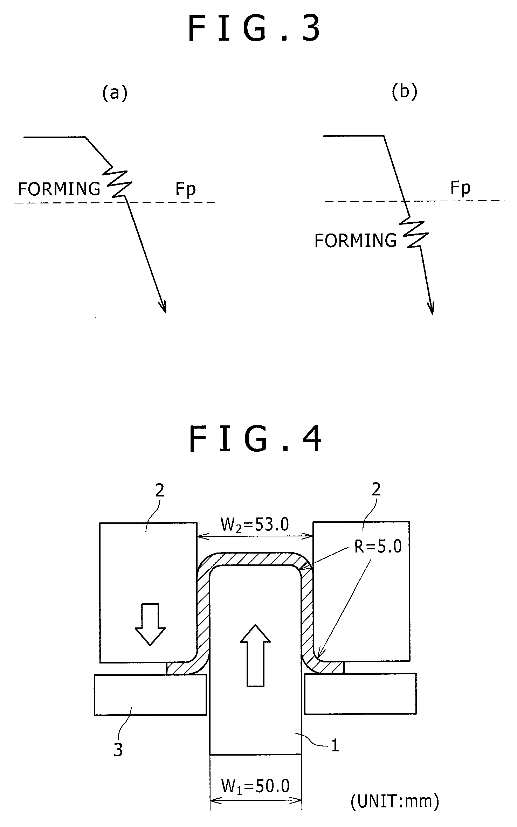

Fig. 3 schematically illustrates an image of a heat pattern. In this figure, Fig. 3(a) illustrates an image of a conventional heat pattern and illustrates the fact that the forming is started (and finished) at a temperature higher than Fp in just the state (without cooling) after the heating. In contrast, Fig. 3(b) illustrates the image of the heat pattern according to the present invention and illustrates the fact that the forming is started after cooling to a temperature lower than the Fp.

In the present invention, the term "solidifying point of the plated layer" as a reference for cooling means a solidifying point before the forming (that is, before the heating). An alloying of Zn-Fe-based plating is progressed in the heating process, resulting in increasing the content of Fe in the plated layer and also raising the solidifying point of the plated layer. In consideration of these matters, it is conceivable to suppress the LME without cooling to the solidifying point before the heating. In practice, however, the LME is not suppressed when the cooling is not performed up to the temperature lower than the solidifying point before the heating. Although not being totally clear, that reason is estimated that the average content of Fe in the plated layer is increased by the heating, while the alloying is not locally progressed in some areas (that is, area of the solidifying point before the heating), resulting in determining the temperature at which the LME occurs. That is, an important point of LIM measures is to be cooled to the temperature of the solidifying temperature or lower before the heating, which is determined by a ratio of Fe and Zn in the plated layer.

In addition, the process of starting the forming after heating and then once cooling the surface-treated steel sheet is also effective to further improve the formability. The reason is that an "n" value (work hardening coefficient) of supercooled austenite increases by the cooling of the surface-treated steel sheet to the predetermined temperature after the heating. Generally, the increase of "n" value can contribute to a uniform deformation to improve the formability in all of forming modes such as a shrinkage flange forming, a stretch flange forming, a bulge forming, and a bend forming.

Preferably, an average cooling rate during the above cooling is to ensure an average cooling rate of 20°C/s or more so as to solidify the plated layer as easy as possible. More preferably, the average cooling rate is 30°C/s or more.

Forming start time is a stage after cooling to the temperature of at least not higher than the solidifying point of the plated layer, but is preferably a stage in which the entire of plated layer is solidified. In addition, the forming is preferably started at a temperature higher than a martensitic transformation start temperature "Ms point" from the point of view of the press reaction force or the formability. In order to ensure component strength after the forming, further, it is preferable to be cooled to a temperature lower than at least martensitic transformation point "Ms point".

The present invention is to carry out the press hardening on the surface-treated steel sheet formed with the Zn-Fe-based plated layer, but a steel type of a steel sheet (base steel sheet) used as a base material of the surface-treated steel sheet may consist of general chemical compositions as long as the chemical compositions are suitable for a high-strength steel sheet (see Table 1 of Example described below). In addition, the content of Fe in the Zn-Fe-based plated layer formed on a surface of the base steel sheet is 10 mass% or more to 80 mass% or less (more preferably, 60 mass% or less, and most preferably, 30 mass%) since corrosion resistance, coating adhesion, weldability or the like is easily deteriorated when the content of Fe is too excessive.

Further, it is allowed that the above Zn-Fe-based plated layer also contains alloy elements (for example, Al, Mn, Ni, Cr, Co, Mg, Sn, Pb or the like) other than Fe up to about 3.3 mass%, and these elements has little influence on the solidifying point in terms of the above content. In addition, the Zn-Fe-based plated layer may also contain several inevitable impurities such as Be, B, Si, P, Ti, V, W, Mo, Sb, Cd, Nb, Cu, Sr or the like other than the above compositions. In addition, a preferred plating weight is 90 g/m$^2$ or less (more preferably, 80 g/m$^2$ or less) per one surface and 10 g/m$^2$

or more (more preferably, 20 g/m$^2$ or more) per one surface.

Hereinafter, although the effect of the present invention will be more specifically described by an example, it is understood that the following example is not intended to limit the present invention, but all of the design changes in light of the spirit described above and below should be construed as being included in a technical scope of the present invention.

This application is based upon and claims the benefit of priority from Japanese Patent Application No. 2011-191063, filed September 1, 2011 and from Japanese Patent Application No. 2011-223439, filed October 7, 2011, the entire contents of which are incorporated herein by reference.

[Example]

An experimental slab was made by carrying out a vacuum melting on steel having the chemical compositions indicated in the following Table 1, and the slab was subjected to a hot rolling and then wound up by cooling. Further, the thin steel sheet (base steel sheet) was made by a cold rolling. Further, the Ac$_1$ transformation point and the Ms point in Table 1 are obtained using Expressions (1) and (2) (for example, see "The Physical Metallurgy of Steels, Leslie", MARUZEN, (1985)).

$$\text{Ac}_1 \text{ transformation point (°C)} = 723 + 29.1 \times [\text{Si}] - 10.7 \times [\text{Mn}] + 16.9 \times [\text{Cr}] - 16.9 \times [\text{Ni}] \ldots\ldots\ldots (1)$$

$$\text{Ms point (°C)} = 550 - 361 \times [\text{C}] - 39 \times [\text{Mn}] - 10 \times [\text{Cu}] - 17 \times [\text{Ni} - 20 \times [\text{Cr}] - 5 \times [\text{Mo}] + 30 \times [\text{Al}] \ldots\ldots\ldots (2)$$

wherein, [C], [Si], [Mn], [Al], [Cr], [Mo], [Cu], and [Ni] indicate the content (mass%) of C, Si, Mn, Al, Cr, Mo, Cu, and Ni, respectively. In addition, when the elements indicated in each term of the above Expressions (1) and (2) are not included in the steel, the corresponding term is calculated by assuming as zero.

[Table 1]

| Chemical composition* (mass%) | | | | | | | | | | Ac$_1$ transformation point (°C) | Ms point (°C) |
|---|---|---|---|---|---|---|---|---|---|---|---|
| C | Si | Mn | P | S | Cr | Al | Ti | B | N | | |
| 0.23 | 0.19 | 1.3 | 0.012 | 0.00114 | 0.21 | 0.04 | 0.025 | 0.0029 | 0.0039 | 730 | 413 |

*Balance: Fe and inevitable impurities other than P, S, and N

The Zn-Fe-based plated layer (content of Fe: 12 mass%, solidifying point: 665°C) was formed on the surface of the obtained base steel sheet (plating weight: 50 g/m$^2$ on one surface), and the base steel sheet formed with the Zn-Fe-based plated layer was heated under each of conditions indicated in the following Table 2 and was then subjected to a cooling treatment by an air cooling or an air cool which blows cooled air. Thereafter, the base steel sheet formed with the Zn-Fe-based plated layer was subjected to the forming treatment. At this time, an electric furnace was used in a heating method, and the steel sheet was heated at the predetermined temperature for the predetermined time in the atmosphere. The size of the steel sheet during the cooling was set to be 50 mm $\times$ 250 mm (sheet thickness: 1.4 mm).

For each surface-treated steel sheet which is subjected to the above treatments (heating, cooling, and forming), the formability was examined, and the state of the plated layer was also examined by visual observation of the surface properties of the hardened parts.

The presence or absence of cracking (intergranular cracking of base material) was examined in such a manner that bending and drawing as illustrated in Fig. 4 was carried out using the press hardening under conditions indicated in Table 2 to observe the cross-section of a bending portion. In addition, hardness (Vickers hardness, Hv) of the hardened parts was also measured.

These results are indicated in the following Table 2, along with production conditions (heating temperature, heating time, average cooling rate before forming, forming start temperature, cooling finish temperature) and the content of Fe in the plated layer after forming.

[Table 2]

| Test No. | Heating method | | Cooling method | Forming conditions | | | Content of Fe in plated layer after forming (mass%) | Evaluation | | | |
|---|---|---|---|---|---|---|---|---|---|---|---|
| | Heating temperature (°C) | Heating time (min.) | | Average cooling rate before forming (°C/s) | Forming start temperature (°C) | Cooling finish temperature (°C) | | Formability | Surface property of hardened parts | Intergranular cracking of base material | Vickers hardness (Hv) |
| 1 | 850 | 4 | Air cooling | 32 | 763 | 178 | 57 | x | x (Peeling) | x | 502 |
| 2 | 850 | 4 | Air cooling | 30 | 704 | 151 | 57 | O | x (Peeling) | x | 494 |
| 3 | 850 | 4 | Air cooling | 29 | 660 | 148 | 57 | O | O | O | 488 |
| 4 | 850 | 4 | Air cooling | 28 | 624 | 143 | 57 | O | O | O | 502 |
| 5 | 850 | 4 | Air cooling | 26 | 543 | 138 | 57 | O | O | O | 494 |
| 6 | 850 | 4 | Air cooling | 23 | 494 | 134 | 57 | O | O | O | 487 |
| 7 | 850 | 4 | Air cooling | 20 | 401 | 125 | 57 | x | O | O | 454 |
| 8 | 850 | 4 | Air cool | 16 | 719 | 164 | 57 | O | O | x | 502 |
| 9 | 850 | 4 | Air cool | 10 | 560 | 133 | 57 | O | O | O | 377 |
| 10 | 850 | 1 | Air cooling | 32 | 720 | 174 | 26 | O | x | x | 494 |
| 11 | 850 | 1 | Air cooling | 29 | 672 | 148 | 26 | O | O | x | 488 |
| 12 | 850 | 1 | Air cooling | 28 | 636 | 139 | 26 | O | O | O | 490 |
| 13 | 850 | 1 | Air cooling | 26 | 543 | 137 | 26 | O | O | O | 473 |

| Test No. | Heating method | | Cooling method | Forming conditions | | | Content of Fe in plated layer after forming (mass%) | Evaluation | | | |
|---|---|---|---|---|---|---|---|---|---|---|---|
| | Heating temperature (°C) | Heating time (min.) | | Average cooling rate before forming (°C/s) | Forming start temperature (°C) | Cooling finish temperature (°C) | | Formability | Surface property of hardened parts | Intergranular cracking of base material | Vickers hardness (Hv) |
| 14 | 900 | 4 | Air cooling | 30 | 702 | 162 | 61 | O | O | x | 481 |
| 15 | 900 | 4 | Air cooling | 29 | 662 | 155 | 61 | O | O | O | 488 |
| 16 | 900 | 4 | Air cooling | 27 | 600 | 140 | 61 | O | O | O | 492 |
| 17 | 900 | 1 | Air cooling | 30 | 705 | 149 | 29 | O | O | x | 494 |
| 18 | 900 | 1 | Air cooling | 29 | 675 | 143 | 29 | O | O | x | 490 |
| 19 | 900 | 1 | Air cooling | 28 | 641 | 139 | 29 | O | O | O | 476 |

EP 2 752 257 B1

10

From these results, the following considerations can be made. In Test Nos. 1, 2, 8, 10, 11, 14, 17, and 18, since the forming was performed under conditions out of requirements defined in the present invention, that is, at the temperature higher than the solidifying point before the heating of the plated layer, the peeling (surface property of hardened parts: "x") of the plated layer or the intergranular cracking (intergranular cracking of base material: "x") of the base material has occurred. Among these, in Test No. 1, since the forming start temperature was very high, temperature distribution was likely to occur in the material during the forming, the deformation was concentrated on a vertical wall which hardly came in contact with the forming tool and was hardly cooled in particular, and thus the vertical wall was fractured (formability: "×"). Further, in Test No. 9, although the peeling of the plated layer or the intergranular cracking of the base material does not occur (evaluation about both of them: "O"), the cooling rate is insufficient, bainitic transformation occurs during the cooling, and thus a sufficient strength (hardness) has not been obtained.

Further, in Test No. 7, although the peeling of the plated layer or the intergranular cracking of the base material did not occur (both of them: "O" in evaluation), since the forming was started at the temperature of the Ms point or lower, martensitic transformation occurred, the formability was significantly deteriorated, and thus the fracture was generated in working.

On the other hand, in Test Nos. 3, 4, 5, 6, 12, 13, 15, 16, and 19 which are within the scope of the present invention, it is possible to sufficiently obtain the strength (hardness) (Hv: 450 or more) and to obtain the excellent press hardened parts without causing the peeling of the plated layer or the intergranular cracking of the base material (the surface property of the hardened parts, the intergranular cracking of the base material both "O").

INDUSTRIAL APPLICABILITY

The present invention can produce the press hardened parts having the excellent properties while avoiding the peeling of the plated layer or the intergranular cracking of the base material during the press forming, in such a manner that the forming is started after the surface-treated steel sheet, in which the Zn-Fe-based plated layer is formed on the surface of the base steel sheet, is heated to the temperature that is not lower than $Ac_1$ transformation point of the base steel sheet and 950°C or lower and the surface-treated steel sheet is then cooled to the solidifying point or lower of the plated layer depending on the content of Fe in the plated layer.

REFERENCE SIGNS LIST

1  punch
2  die
3  blank holder
4  steel sheet (blank)

**Claims**

1.  A method for producing a press hardened part of a surface-treated steel sheet (4), the method comprising

    forming a Zn-Fe-based plated layer comprising Fe of from 10 to 80 mass% on a surface of a base steel sheet, thereby obtaining the surface-treated steel sheet (4);
    heating the surface-treated steel sheet (4) to a temperature that is not lower than an $Ac_1$ transformation point of a base steel sheet and 950°C or lower;
    subsequently cooling the surface-treated steel sheet (4) to a temperature not higher than a solidifying point of the Zn-Fe-based plated layer depending on a content of Fe in the Zn-Fe-based plated layer; and
    subsequently press forming the surface-treated steel sheet (4), thereby obtaining the press hardened part,
    wherein the solidifying point of the Zn-Fe-based plated layer is a solidifying point of the Zn-Fe-based plated layer before the heating.

2.  The method according to claim 1, wherein

    in said cooling an average cooling rate is 20°C/s or more.

3.  The method according to claim 1, wherein

said press forming starts at a temperature higher than a martensitic transformation start temperature of the base steel sheet, and
said press forming finishes at a cooling finish temperature lower than the martensitic transformation start temperature.

4. The method according to claim 1, wherein

in said heating a temperature is not lower than an $Ac_3$ transformation point of the base steel sheet and 930°C or lower.

5. The method according to claim 1, wherein

in said cooling an average cooling rate is 30°C/s or more.

6. The method according to claim 1, wherein

said press forming does not start until the entire Zn-Fe-based plated layer is solidified.

7. The method according to claim 1, wherein

the Zn-Fe-based plated layer comprises Fe of from 10 to 60 mass%.

8. The method according to claim 1, wherein

the Zn-Fe-based plated layer comprises Fe of from 10 to 30 mass%.

9. Press hardened parts produced by the method according to any one of claims 1 to 8.


**Patentansprüche**

1. Verfahren zum Herstellen eines gehärteten Pressteils eines oberflächenbehandelten Stahlbleches (4), wobei das Verfahren die folgenden Schritte aufweist:

Ausbilden einer plattierten Lage auf Zn-Fe-Basis, die Fe in von 10 bis 80 Massenprozent auf einer Oberfläche eines Basisstahlbleches aufweist, wodurch das oberflächenbehandelte Stahlblech (4) erhalten wird;
Erwärmen des oberflächenbehandelten Stahlbleches (4) auf eine Temperatur, die nicht niedriger als ein $Ac_1$-Transformationspunkt eines Basisstahlbleches und 950°C oder niedriger ist;
anschließendes Abkühlen des oberflächenbehandelten Stahlbleches (4) auf eine Temperatur, die nicht höher als ein Verfestigungspunkt der plattierten Lage auf Zn-Fe-Basis ist in Abhängigkeit von einem Gehalt an Fe in der plattierten Lage auf Zn-Fe-Basis; und
anschließendes Pressformen des oberflächenbehandelten Stahlbleches (4), wodurch das gehärtete Pressteil erhalten wird,
wobei der Verfestigungspunkt der plattierten Lage auf Zn-Fe-Basis ein Verfestigungspunkt der plattierten Lage auf Zn-Fe-Basis vor dem Erwärmen ist.

2. Verfahren gemäß Anspruch 1, wobei

bei dem Abkühlen eine durchschnittliche Kühlrate 20°C/s oder mehr beträgt.

3. Verfahren gemäß Anspruch 1, wobei

das Pressformen bei einer Temperatur beginnt, die höher als eine martensitische Transformationsstarttemperatur des Basisstahlbleches ist, und
das Pressformen bei einer Kühlbeendigungstemperatur beendet wird, die niedriger als die martensitische Transformationsstarttemperatur ist.

4. Verfahren gemäß Anspruch 1, wobei

bei dem Erwärmen eine Temperatur nicht niedriger als ein Ac$_3$-Transformationspunkt des Basisstahlbleches und 930°C oder niedriger ist.

5. Verfahren gemäß Anspruch 1, wobei

   bei dem Abkühlen eine durchschnittliche Kühlrate 30°C/s oder mehr beträgt.

6. Verfahren gemäß Anspruch 1, wobei

   das Pressformen nicht beginnt, bis die gesamte plattierte Lage auf Zn-Fe-Basis verfestigt ist.

7. Verfahren gemäß Anspruch 1, wobei

   die plattierte Lage auf Zn-Fe-Basis Fe in von 10 bis 60 Massenprozent aufweist.

8. Verfahren gemäß Anspruch 1, wobei

   die plattierte Lage auf Zn-Fe-Basis Fe in von 10 bis 30 Massenprozent aufweist.

9. Gehärtete Pressteile, die durch das Verfahren gemäß einem der Ansprüche 1 bis 8 hergestellt sind.


**Revendications**

1. Procédé de production d'une pièce trempée à la presse constituée d'une tôle d'acier à surface traitée (4), le procédé comprenant
   la formation d'une couche de placage à base de Zn-Fe comprenant du Fe à raison de 10 à 80 % en poids sur une surface d'une tôle d'acier de base, pour obtenir ainsi la tôle d'acier à surface traitée (4) ;
   le chauffage de la tôle d'acier à surface traitée (4) à une température qui n'est pas inférieure à un point de transformation Ac$_1$ d'une tôle d'acier de base et 950°C ou moins ;
   le refroidissement ultérieur de la tôle d'acier à surface traitée (4) à une température qui n'est pas supérieure à un point de solidification de la couche de placage à base de Zn-Fe qui dépend de la teneur en Fe de la couche de placage à base de Zn-Fe ; et
   le formage ultérieur sur presse de la tôle d'acier à surface traitée (4), pour obtenir ainsi une pièce trempée à la presse, dans lequel le point de solidification de la couche de placage à base de Zn-Fe est un point de solidification de la couche de placage à base de Zn-Fe avant chauffage.

2. Procédé selon la revendication 1, dans lequel
   lors dudit refroidissement, une vitesse de refroidissement moyenne est de 20°C/s ou plus.

3. Procédé selon la revendication 1, dans lequel
   ledit formage sur presse commence à une température supérieure à une température de départ de la transformation martensitique de la tôle d'acier de base, et
   ledit formage sur presse finit à une température de fin de refroidissement inférieure à la température de départ de la transformation martensitique.

4. Procédé selon la revendication 1, dans lequel
   lors dudit chauffage, une température n'est pas inférieure à un point de transformation Ac$_3$ de la tôle d'acier de base et 930°C ou moins.

5. Procédé selon la revendication 1, dans lequel
   lors dudit refroidissement, une vitesse de refroidissement moyenne est de 30°C/s ou plus.

6. Procédé selon la revendication 1, dans lequel
   ledit formage sur presse ne commence pas tant que toute la couche de placage à base de Zn-Fe n'est pas solidifiée.

7. Procédé selon la revendication 1, dans lequel
   la couche de placage à base de Zn-Fe comprend du Fe à raison de 10 à 60 % en poids.

8. Procédé selon la revendication 1, dans lequel
la couche de placage à base de Zn-Fe comprend du Fe à raison de 10 à 30 % en poids.

9. Pièces trempées à la presse produites par le procédé selon l'une quelconque des revendications 1 à 8.

# F I G . 1

2　　CL　　　　4

2

2a

2a

rp

COOLING
MEDIUM

COOLING
MEDIUM

rd

3

1a　　1

BHF　　COOLING
　　　MEDIUM

BHF

# F I G . 2

CONTENT OF Zn (ATOM %)

0　10　20　30　40　50　60　70　80　90　100

1538 ℃

1500

L

1394

1300

TEMPERATURE (℃)

Fp

1100

(γFe)

900

912 ℃

(αFe, δFe)

782 ℃

665 ℃

770 ℃

46

Γ

700

623 ℃

MAGNETIC TRANSFORMATION

550 ℃

530 ℃

δ

425 ℃

500

Γ₁

ζ

419.58℃

300

0　10　20　30　40　50　60　70　80　90　100

Fe　　　　CONTENT OF Zn (MASS %)　　　Zn

# FIG.3

(a)

FORMING ──── Fp

(b)

Fp

FORMING

# FIG.4

$W_2 = 53.0$

R=5.0

$W_1 = 50.0$

(UNIT:mm)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003073774 A
- JP 2003147499 A
- JP 2007182608 A

- JP 2011117086 A
- JP 2011191063 A
- JP 2011223439 A

**Non-patent literature cited in the description**

- The Physical Metallurgy of Steels, Leslie. MARUZEN, 1985